Europäisches Patentamt

European Patent Office

Office européen des brevets

(11) Publication number: **0 494 464 A1**

# EUROPEAN PATENT APPLICATION

(21) Application number: **91200044.5**

(22) Date of filing: **11.01.91**

(51) Int. Cl.⁵: **G03B 27/16**

(43) Date of publication of application:
**15.07.92 Bulletin 92/29**

(84) Designated Contracting States:
**AT BE CH DE DK ES FR GB GR IT LI LU NL SE**

(71) Applicant: **AGFA-GEVAERT naamloze vennootschap**
**Septestraat 27**
**B-2510 Mortsel(BE)**

(72) Inventor: **Burtin, Jean**
**Vosstraat 11**
**B-2400 Mol(BE)**
Inventor: **Engels, Herman Maria**
**Kapelwei 7**
**B-2990 Wuustwezel(BE)**

(54) **A photographic exposure apparatus.**

(57) A photographic exposure apparatus with a vacuum frame (9) for holding a transparent image-bearing sheet in tight contact with a radiation-sensitive film, a lamp housing (16) with a metal halide discharge lamp for carrying out the exposure of the film to the image-bearing sheet, and a focal plane type shutter (21) for closing the exposure window of the lamp housing.

Fig.2

## BACKGROUND OF THE INVENTION

Field of the invention.

The present invention relates to a photographic exposure apparatus which comprises an UV-emitting metal halide discharge lamp for exposing a radiation-sensitive film in contact with a transparent image-bearing sheet.

Description of the prior art.

Known photographic exposure apparatus comprise a so-called vacuum exposure frame for holding a transparent image-bearing sheet in tigh contact with a light-sensitive film, a lamp housing with an UV-emitting metal halide discharge lamp for carrying out the exposure of the light-sensitive film to the image-bearing sheet, a shutter for closing the lamp housing, forced air cooling means, an adjustable electric power supply for the lamp and means for controlling the power supply and the shutter, so that the shutter is open and the lamp is operated at full power during the exposure of the light-sensitive film and the shutter is closed and the lamp is kept energized at reduced power during standby of the apparatus, i.e. between successive exposures.

The reason for operating the lamp at reduced power during the periods of non-exposure is as follows.

Metal halide discharge lamps have a high radiation efficiency compared with the low-pressure pulsed xenon discharge lamps used on a vast scale for the copyboard lighting of cameras or copyboards. They have, however, one major drawback : they need a running-up time of several minutes and cannot be re-ignited at once without using a high voltage, so that frequent switching is impossible without special measures. A solution to this problem is to have the lamps permanently burning when the apparatus is in use and to provide the lamp housing with a shutter which is closed during preparations for the next exposure. In these intervals the lamps are automatically switched to a fraction of full power.

As an exposure is to be made, the lamp is switched to full power buth the shutter is opened, and the effective exposure started, only after a delay period which is sufficiently long for the lamp to obtain a stable intensity and a stable spectral composition. The described delay period is usually coupled with the period required for obtaining a sufficient underpressure in the vacuum exposure frame. Thus the warming-up of the lamp to full power in practice causes no retardation of the exposure process.

Exposure apparatus of the described kind raise a problem when low density image-bearing sheets must be exposed since in such case the shutter times become so short, for instance of the order of magnitude of one second or less, that the usual shutters in these apparatus are no longer capable of ensuring a well-timed and a uniform opening of the exposure window of the lamp housing over the complete exposure time.

One known type of shutter is a rotatable shutter which is used in exposure apparatus of the type PRINTON DESC, CDL 1502, manufactured by Agfa-Gevaert N.V., Mortsel - Belgium, and intended for dry etching reprographic work. The mass of this shutter is too large to allow accelerations and decelerations that are required for exposure periods as small as a few seconds.

Another known shutter is a so-called iris shutter which has the disadvantage that opening of the exposure window starts in the centre and ends at the edges, whereas closing passes reversely so that the central zone of the window remains opened for a longer time than the edge regions whereby the exposure frame is not lit uniformly.

It has been proposed to obviate the problems related with short exposure times by providing an extra control in the electric supply for the metal halide lamp which enables the lamp to be operated at reduced power whereby the exposure time is correspondingly increased so as to get a usual value, e.g. from 1 to 5 seconds. This measure complicates the electronic circuitry of the lamp supply and also annihilates the advantage of short exposure times with low density image-bearing sheets.

## SUMMARY OF THE INVENTION

It is an object of the invention to provide a photographic exposure apparatus with a metal halide discharge lamp, which has a shutter that allows short exposures.

It is an additional object to provide suchlike apparatus with a shutter which is arranged as a module for easy fitting to a lamp housing.

Statement of the invention

In accordance with the present invention, a photographic exposure apparatus comprising means for holding a transparent image-bearing sheet in tight contact with a radiation-sensitive film, a lamp housing with a metal halide discharge lamp for carrying out the exposure of the film to the image-bearing sheet, a shutter for closing the exposure window of the lamp housing, and control means for starting the opening of the shutter only as the lamp has been lit to full power, is characterized thereby that the shutter is a focal plane-type shutter.

A focal plane-type shutter has the advantage of a very reduced height, i.e. the dimension that is normal to the plane of the exposure opening, so that it may be easily integrated in existing exposure apparatus.

Furthermore, it readily lends itself to construction in modular form so that it can be fitted at will to a lamp housing in dependence on the type of lamp used in the housing. This latter feature is important for exposure apparatus designed for operation with different types of lamps. For instance, a given apparatus may be suited for use with a metal halide lamp as well as with halogen incandescent lamps. The lamp housing of the apparatus may remain unchanged, buth the interior of it, and more in particular the reflector and the lamp support may be easily interchangeable so that the manufacturers of suchlike apparatus can quickly adapt a standard apparatus to a given light source.

Since light sources in the form of incandescent lamps do not require a shutter because they can be switched on and off rather fast, it may be interesting to design the shutter as a separate unit which is readily fittable to and removable from the lamp housing in dependence on the type of light source installed in the lamp housing.

The shutter may comprise two wound blinds as known in the art which are released at the appropriate moments to determine the desired exposure time, but the shutter may also comprise two spring-loaded adjacent blades that are controlled for release in succession thereby first to open and next to close the exposure window, and for being simultaneously armed. The two-blade arrangement has the advantage of an extremely simple, flat and lightweight construction.

BRIEF DESCRIPTION OF THE DRAWINGS

The invention will be described hereinafter by way of example with reference to the accompanying drawings, wherein :

Fig. 1 is a diagrammatic illustration of one embodiment of a top-light photographic exposure apparatus,

Fig. 2 is a diagrammatic illustration of the lamp housing of the apparatus according to Fig. 1,

Fig. 3 is a section of the shutter on line 3-3 of Fig. 2, and

Figs 4a to c illustrate different positions of the shutter.

Detailed description of the invention

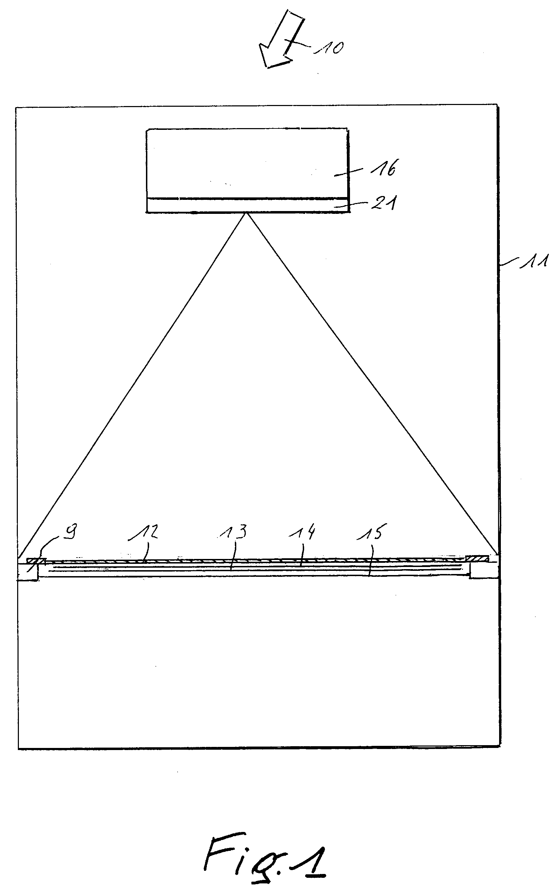

The apparatus illustrated by way of embodiment in Fig. 1 is a so-called top-light exposure apparatus.

The apparatus, generally designated by the numeral 10, is mounted with a cabinet 11 having an exposure frame 9 with a glass exposure plate 12 that can be pivoted upwardly to enable the operator to locate a radiation-sensitive film 13 and a transparent sheet 14, which bears the image to be exposed, in contact with each other on a blanket 15 through the open frontside of the cabinet. As the glass plate 12 has been lowered on the combination of film and sheet, a vacuum is established between the glass plate and the blanket in order to urge both sheets tightly towards the rear side of the glass plate.

A lamp housing 16 mounted in the top of the cabinet comprises a tube-like metal halide discharge lamp 17 (see Fig. 2), a reflector 18 mounted in a frame 19, and an electronic power supply 20 for the lamp. The lamp sockets are supported by the frame 19 and the frame is arranged as a module which can be easily removed from the housing and replaced by another one which has for instance a quartz halogen incandescent lamp and a corresponding reflector and lamp fittings. The lamp housing finally comprises a blower 21 for cooling the lamp and for directing an extra stream of forced cooling air onto the lamp pinches in order to keep their temperature low enough, as known in the art.

A focal plane shutter 21 is fitted at points 49 and 50 in a removable way to the underside of the lamp housing, the shutter opening corresponding with the exposure window of the lamp house as shown diagrammatically.

The shutter does not provide a completely lighttight closure of the lamp housing so that during preparations for the next exposure the lamp housing still emits a reduced amount of actinic light. Such emission is harmless in the apparatus under consideration as the latter in fact is destined for daylight processing of photographic contact printing material, more in particular for contact printing and dry etching. The term "dry etching" is in fact a misnomer; it is actually a retouching technique that involves no etching at all. The technique relies on controlled over-exposure of a photographic film so as to obtain halftones with a modified dot size. The retoucher can isolate the areas to be corrected by means of proper masks, using either cut-and-peel film or photographic dropout masks. A certain minimum exposure produces an exact negative copy, whereas a stronger exposure increases the dot size in the copy.

One example of a system in which both operations are integrated is PRINTON DESC (PRINTON is a trade name of AGFA-GEVAERT N.V., Mortsel, Belgium), an acronym for "PRINTON Dry Etching System by Computer". The work station comprises four elements : a contact exposure cabinet, a densitometer with a light table, a computer with a monitor and a working table.

The exposure apparatus described hereinbefore comprises in practice numerous other elements that are indispensable for its proper working such as a UV-absorbing screen in the front opening of the cabinet to protect the operator's eyes, means for pivoting this screen away during loading and unloading of the exposure frame, a vacuum pump for withdrawing air from the exposure frame, display means for signalling the status of the apparatus to the operator, an exposure timer, etc. All these expedients are known in the art and their further description is unnecessary for understanding the operation of the present embodiment of the invention.

The focal plane shutter comprises the following parts (see Figs. 2 and 3), which show the shutter in the armed position, closing thereby the exposure window 23 of the shutter. A first and a second blade 24 and 25 in the form of nearly square blades of sheet metal that are slideably mounted with their lateral ends in lateral guides (not shown) for displacement in a horizontal plane. The blades have angled front and rear ends 26 to 29 ensuring them sufficient transverse rigidity. Also, the rear ends co-operate with respective pawls 30 and 31 withholding the blades, which are biased by pairs of tension springs 32 and 34.

One end of the springs is fitted to the frame of the shutter, whereas the other end is attached to a corresponding leg of the blades. The leading edge 28 of blade 25 is provided with a resilient bar 38 for abutment with rear end 27 of blade 24.

Pawls 30 and 31 are controlled by rotary solenoids 36 and 37.

The arming of the shutter occurs by means of an endless chain mechanism comprising two endless chains 40, 41 with two teeth 42, 43 as shown for the chain 40.

The two teeth are spaced over equal distances along the chain and the arrangement is such that as a tooth 42 just looses contact with the rear edge 26 of the blade 24 in the illustration of Fig. 2, the other tooth opens a microswitch 45 interrupting the driving of the chain mechanism. The driving of the chain mechanism occurs in the present example by an electric motor 46 with built-in reduction gear, which drives the shaft 47.

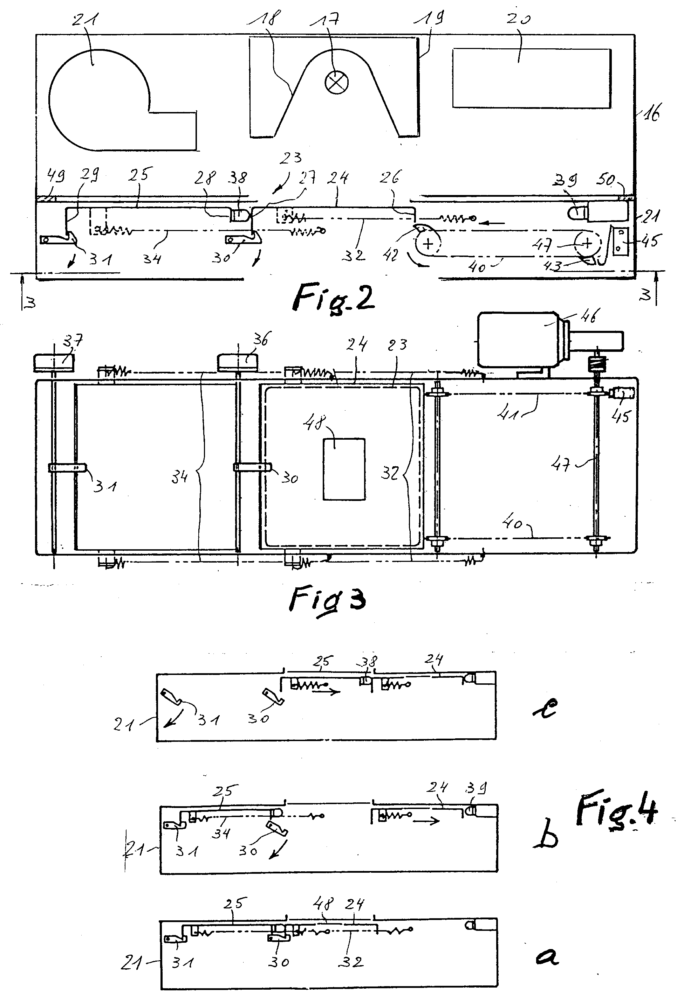

The operation of the apparatus is as follows with reference to Figs. 4a to 4c, which shown different positions of the shutter mechanism.

The operator places a radiation-sensitive film and a document to be reproduced in the exposure frame 9 within the cabinet 11, and is aided thereby by the illumination of the lamp 17 burning in the standby position, through the UV-filter 48 in the centre of the closed blade 24, which passes a moderate amount of visible light.

Then the required exposure time is set and the exposure cycle is started. Firstly, an underpressure is drawn in the exposure frame to ensure the proper contact of both sheets, and the power supply is switched to apply full power to lamp 17.

As the apparatus is ready for exposure, solenoid 36 is controlled to rotate pawl 30 thus releasing shutter blade 24 that is pulled by springs 32 into its open position and stopped by a resilient stopper 39 (see Fig. 4b).

The exposure window 23 is now completely open and the exposure continues until pawl 31 is withdrawn under control of timer means whereby blade 25 is pulled by springs 34 to close the shutter (see Fig. 4c). Blade 25 is stopped by stopper 38, which also ensures a lighttight connection between both shutters.

The exposure being terminated, the electronic circuit briefly energizes motor 46, and upon rotation of the motor tooth 43 looses contact with the microswitch lever so that the motor circuit is kept closed until interrupted by the other tooth. Rotation of the endless chain has caused teeth 43 to engage the front edge 26 of blade 24 and so to push both blades 24 and 25 to the lefthand side until they are engaged by pawls 30 and 31 thus arming the shutter.

The invention is not limited to the described embodiment. The exposure apparatus may also be a bottom-light one.

The focal plane shutter may also be integrated in and make part of the lamp housing, but then the possibility of the removal of the shutter is lost, which is advantageous if an incandescent lamp is used as mentioned already.

The electric motor for arming the shutter blades may be replaced by pneumatic motor means, which through the intermediary of appropriate valves is operated by the underpressure established by the vacuum pump, which ensures the evacuation of the exposure frame.

The lamp housing can be provided with sensing means for measuring the light output and controlling the power supply for the lamp in feedback.

The metal halide lamp may be powered by a conventional ballast on mains frequency, or by a high frequency convertor. The metal halide lamp may be energized in standby in such a way that, in addition to the reduced power, the lamp is intermittently energized at high power during short internals thereby to increase the lifetime of the lamp. The latter feature forms the object of our co-pending EU application No. 90 202 455.3 entitled : "A photographic exposure apparatus".

**Claims**

1. A photographic exposure apparatus (10) comprising means (9) for holding a transparent image-bearing sheet in tight contact with a radiation-sensitive film, a lamp housing (16) with a metal halide discharge lamp (17) for carrying out the exposure of the film to the image-bearing sheet, a shutter (21) for closing the exposure window (23) of the lamp housing, and control means for starting the opening of the shutter only as the lamp has been lit to full power, characterized in that the shutter is a focal plane-type shutter.

2. A photographic exposure apparatus according to claim 1, wherein the shutter is arranged as a separate unit (21) which is readily fittable to and removable from the lamp housing (16).

3. A photographic exposure apparatus according to claim 1 or 2, wherein the shutter comprises two spring-loaded blades (24,25) located next to each other and controlled by release means (30,31) for being released in succession thereby to open resp. close the exposure window, and for being armed simultaneously.

4. A photographic exposure apparatus according to claim 3, wherein the blades (24,25) have a rectangular form and are slideably supported with their lateral margins in corresponding elongate guides.

5. A photographic exposure apparatus according to claim 3 or 4, wherein the blades (24) of the shutter that closes the shutter in the armed position is provided on at least part of its surface with a UV-filter (48).

Fig.1

Fig.2

Fig 3

Fig.4

c

b

a

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-C-3 701 922 (KLIMSCH & CO.)<br>* Column 3, lines 43-59; figures 1-3 *<br>--- | 1 | G 03 B 27/16 |
| Y | FR-A- 969 275 (V. LEBOSSE)<br>* Page 2; figures 1-6 * | 1 | |
| A | | 3,4 | |
| | --- | | |
| Y | US-A-3 860 341 (P.E. TOBIAS)<br>* Column 3, lines 1-8; column 4, lines 1-9,30-42; column 5, lines 42-46; figures 1,2 *<br>----- | 1 | |

**TECHNICAL FIELDS SEARCHED (Int. Cl.5)**

G 03 B 27/16
G 03 B 9/42

The present search report has been drawn up for all claims

| Place of search | Date of completion of the search | Examiner |
|---|---|---|
| THE HAGUE | 10-09-1991 | BOEYKENS J.W. |